Europäisches Patentamt

European Patent Office

Office européen des brevets

(19)

(11) Numéro de publication : **0 334 441 B1**

(12) **FASCICULE DE BREVET EUROPEEN**

(45) Date de publication du fascicule du brevet :
13.01.93 Bulletin 93/02

(51) Int. Cl.⁵ : **G01B 7/14, G01K 13/08**

(21) Numéro de dépôt : **89200688.3**

(22) Date de dépôt : **20.03.89**

(54) **Capteur capacitif.**

(30) Priorité : **25.03.88 FR 8803939**

(43) Date de publication de la demande :
**27.09.89 Bulletin 89/39**

(45) Mention de la délivrance du brevet :
**13.01.93 Bulletin 93/02**

(84) Etats contractants désignés :
**DE FR GB**

(56) Documents cités :
**EP-A- 0 246 576
DE-B- 1 004 387
DE-B- 1 040 804
GB-A- 1 108 684
GB-A- 2 071 852
US-A- 3 926 053**

(73) Titulaire : **THERMOCOAX**
**10 rue de la Passerelle**
**F-92150 Suresnes (FR)**
(84) **FR**
Titulaire : **N.V. Philips' Gloeilampenfabrieken**
**Groenewoudseweg 1**
**NL-5621 BA Eindhoven (NL)**
(84) **DE GB**

(72) Inventeur : **Bailleul, Gilles**
**Société Civile S.P.I.D. 156, Boulevard**
**Haussmann**
**F-75008 Paris (FR)**
Inventeur : **Rodrigues, Carlos**
**Société Civile S.P.I.D. 156, Boulevard**
**Haussmann**
**F-75008 Paris (FR)**
Inventeur : **Albijat, Samin**
**Société Civile S.P.I.D. 156, Boulevard**
**Haussmann**
**F-75008 Paris (FR)**

(74) Mandataire : **Landousy, Christian et al**
**Société Civile S.P.I.D. 156, Boulevard**
**Haussmann**
**F-75008 Paris (FR)**

## Description

L'invention concerne un capteur capacitif pour la mesure en dynamique d'au moins deux caractéristiques d'une turbomachine, ce capteur comprenant une surface conductrice destinée à être fixée au carter au droit d'une rangée d'aubes tournantes pour former la première armature d'un condensateur dont la seconde armature est constituée successivement par chacune des extrémités des aubes tournantes lorsque ces extrémités passent à proximité de cette surface conductrice, ce capteur comprenant en outre un thermocouple en contact thermique avec la surface conductrice et comprenant un moyen d'interconnexion électrique pour relier cette surface conductrice à desdits premiers moyens de détection électrique pour mesurer les variations de la capacité du condensateur ainsi formé, et un moyen d'interconnexion électrique pour relier ce thermocouple à desdits seconds moyens de détection électrique pour mesurer la température du carter dans la région de fixation de ladite surface conductrice. Un tel capteur est divulgué par le document US-A-3 926 053.

L'invention trouve son application notamment dans l'aéronautique. Dans ce domaine, des progrès considérables ont été obtenus au cours de ses dernières années dans la définition et la mise au point des turboréacteurs à hautes performances et à rendements élevés. Mais aujourd'hui, il devient de plus en plus difficile, vu le niveau déjà atteint, d'accroître encore le rendement de telles machines de façon notable, sauf en se penchant avec beaucoup de soin sur des points particuliers encore peu étudiés mais susceptibles de conduire à de nouvelles améliorations de rendement non négligeables.

Ainsi, il est déjà connu de l'état de la technique que la grandeur du jeu entre l'extrémité des aubes et le carter d'une turbomachine est un paramètre important pour les performances d'un moteur.

Un capteur capacitif est déjà connu du brevet GB-2 071 852. Ce capteur comprend une électrode présentant une surface conductrice circulaire et un connecteur qui s'étend de l'électrode vers l'extérieur du capteur et qui est enrobé par une graine métallique cylindrique dont il est séparé par un isolant minéral. L'électrode, le connecteur et la gaine sont maintenus par un manchon métallique cylindrique isolé de l'électrode par un manchon intermédiaire cylindrique en céramique. Un système de blindage du capteur est en outre prévu. Le manchon métallique est fixé sur le carter d'une turbomachine par une ouverture pratiquée dans la paroi de ce carter, au droit d'une rangée d'aubes du rotor, de manière telle que la surface conductrice de l'électrode est solidaire du carter et alignée avec la surface interne de ce dernier. Chaque extrémité d'aube forme avec la surface conductrice un condensateur dont la capacité est une fonction de la distance qui sépare cette extrémité d'aube de ladite surface conductrice. Le connecteur de ce capteur permet d'incorporer le condensateur ainsi constitué dans un circuit oscillant. La fréquence du signal de sortie de ce circuit oscillant est alors fonction de la capacité de ce condensateur, et donc fonction du jeu entre les extrémités d'aubes et le carter.

Un autre capteur capacitif est aussi connu du brevet FR-2 506 023. Ce document décrit une application d'un tel capteur à la détermination de la vitesse d'une turbine. A cet effet, à un condensateur similaire au condensateur décrit plus haut est associé un élément selfique pour former un circuit résonnant. Ce circuit résonnant est couplé à un oscillateur dont il détermine la fréquence de fonctionnement de sorte que le signal de sortie de cet oscillateur est modulé en fréquence au rythme de passage des extrémités des aubes devant la surface conductrice du capteur.

Le brevet GB-2 071 852 enseigne en outre que le signal de sortie d'un circuit oscillant incluant un capteur capacitif peut être utilisé pour piloter un système de contrôle asservi de manière à faire varier le diamètre interne effectif du carter et ainsi faire varier le jeu entre les extrémités d'aubes et le carter. Mais ce document n'enseigne pas comment ce résultat est obtenu.

En fait, l'homme du métier sait bien que les turbomachines sont munies de durites qui s'enroulent autour du carter et qui sont destinées à la circulation d'un fluide pour réchauffer ou refroidir la turbine, en fonction non pas du régime réel du moteur, mais du régime théorique prévu par le plan de vol, et ainsi faire varier la dilatation du carter.

Le problème technique posé est donc de pouvoir activer le système de refroidissement ou de réchauffement du carter non jas à partir d'un plan de vol nécessairement approximatif prévu à l'avance, mais par un asservissement piloté par une mesure qui dépend du régime réel du moteur, de façon à contrôler complètement la valeur du jeu entre extrémités d'aubes tournantes et carter.

La solution à un tel problème permettra d'obtenir des grains en rendement tout à fait appréciables. En effet, il faut savoir qu'une perte de 1 % du rendement d'un moteur, dû au jeu entre aubes et carter, résulte en une augmentation de la consommation en carburant de l'ordre de 2 à 4 % selon le type de moteur.

En effet, le problème de l'asservissement qui permet de commander la valeur du jeu entre une aube donnée et le carter n'est réellement bien posé que si l'on considère que l'évolution de ce jeu pendant le fonctionnement est essentiellement fonction de la température du point où est mesuré le jeu. La connaissance de la température en ce point précis constitue donc un élément essentiel

Un dispositif pour réaliser à la fois une mesure de température et une mesure capacitive de distance, est déjà connu du brevet US-3 926 053. Ce dispositif inclut un capteur avec des moyens de détection de la température, et des moyens de détection de la distance entre une surface de référence et la surface tournante d'un rotor. La surface de référence est une électrode métallique fixée au carter d'une ultra-centrifugeuse, dans l'intervalle séparant le rotor du stator. Dans ce capteur, l'élément détecteur de température est un thermocouple disposé en contact thermique avec la face arrière de l'électrode, de manière à ce que la température et la distance mesurées concernent la même zone de la surface tournante. L'électrode métallique peut en outre être déplacée dans l'intervalle entre le carter et le rotor, au moyen d'un micromètre manuel, de manière à évaluer la température du rotor comme une fonction de la distance entre l'électrode et le rotor. La mesure de la distance se fait par la mesure de la capacité constituée par le rotor, l'intervalle et l'électrode. La mesure de la température, et la mesure de la capacité sont transportées respectivement par des lignes différentes vers les plots d'une prise multiple isolée électriquement et fixée mécaniquement sur la face arrière de l'électrode.

Un des buts de l'invention est donc de proposer un tel capteur capable de fonctionner dans la gamme des températures qui règnent dans un turboréacteur, c'est-à-dire 600 à 750°C, et ceci avec un coût de fabrication raisonnable

Selon l'invention, ce problème est résolu par un capteur tel que décrit dans le préambule, en outre caractérisé en ce que les moyens d'interconnexion électrique sont formés des propres conducteurs du thermocouple, ce thermocouple étant du type blindé à isolant minéral, dont le blindage est réalisé par une graine métallique cylindrique interrompue à proximité du point de soudure pour laisser les conducteurs et le point de soudure dénudés sur une petite longueur, et en ce que les moyens d'interconnexion électrique comportent en outre des moyens pour mettre le point de soudure du thermocouple en contact électrique et thermique avec la surface conductrice, lesdits moyens comprenant au moins une électrode métallique, avec laquelle le point de soudure dénudé du thermocouple est en contact électrique et thermique, et qui est munie d'une face avant plane coopérant avec la surface conductrice.

Dans une forme préférentielle de réalisation de l'invention, ce capteur est caractérisé en ce qu'une pièce intermédiaire isolante en céramique est brasée de façon étanche sur l'électrode, et un corps de capteur métallique est brasé de façon étanche à la fois sur la gaine du thermocouple et sur la pièce isolante intermédiaire, le corps du capteur et la pièce intermédiaire étant munis de logements axiaux pour laisser passer la gaine du thermocouple.

L'invention sera mieux comprise au moyen de la description suivante, illustrée par les figures annexées dont :

- la figure 1a qui montre un premier exemple de réalisation du capteur selon l'invention dans une vue longitudinale externe ;
- la figure 1b qui montre le même capteur en coupe longitudinale ;
- la figure 1c qui montre le même capteur en coupe transversale selon l'axe C-C de la figure 1b ;
- la figure 1d qui montre ce même capteur en coupe transversale selon l'axe D-D de la figure 1b ;
- la figure 2a qui montre un deuxième exemple de réalisation du capteur selon l'invention dans une vue longitudinale externe ;
- la figure 2b qui montre ce même capteur en coupe longitudinale ;
- la figure 2c qui montre ce même capteur en coupe transversale selon l'axe A-A de la figure 2b ;
- la figure 2d qui montre ce même capteur en coupe transversale selon l'axe B-B de la figure 2b ;
- la figure 3a qui montre un troisième exemple de réalisation du capteur selon l'invention, en vue longitudinale externe ;
- la figure 3b qui montre ce même capteur en coupe longitudinale ;
- la figure 3c qui montre ce même capteur en coupe transversale selon l'axe E-E de la figure 3b, et la figure 3d selon l'axe F-F ;
- la figure 4a qui montre un thermocouple standard avant son incorporation dans le capteur selon l'invention ;
- la figure 4b qui montre ce thermocouple dans une première étape de sa préparation en vue du montage dans le capteur ;
- la figure 4c qui montre ce thermocouple dans l'étape finale de sa préparation en vue du montage dans le capteur ;
- la figure 5a qui montre schématiquement le capteur capacitif monté sur le carter d'une turbomachine ;
- les figures 5b, 5c qui montrent des exemples de réalisation d'un dispositif de fixation du capteur sur la paroi d'un carter.

On rappelle d'abord qu'une turbomachine comprend en général au moins :
- une chambre de compression des gaz formée d'un carter ou stator muni d'aubes fixes dans lequel tourne une roue à aubes ou rotor. Les aubes fixes sont alternées avec les aubes tournantes, et l'extrémité de ces dernières se déplace à une distance de l'ordre de 1/10 de mm de la paroi interne du carter. Cette dis-

3

tance ou jeu des extrémités d'aubes tournantes est donc très critique. La température qui règne dans cette zone va de 500 à 750°C ;
- une chambre de combustion ou le combustible est injecté et brûlé ;
- une chambre de détente où les gaz brûlés comprimés sont acheminés vers la sortie de la turbine. Cette chambre comprend aussi, comme la chambre de combustion, un stator et un rotor à aubes. Mais les températures dans cette zone sont de l'ordre de 1300°C ;
- des systèmes de raidissement du rotor pour empêcher de trop grandes déformations ;
- des systèmes de durites qui s'enroulent à l'extérieur du stator pour la circulation de fluides de réchauffement ou refroidissement pilotée en fonction d'un plan de vol établi à l'avance.

Le capteur selon l'invention est notamment prévu pour être utilisé dans une chambre de compression.

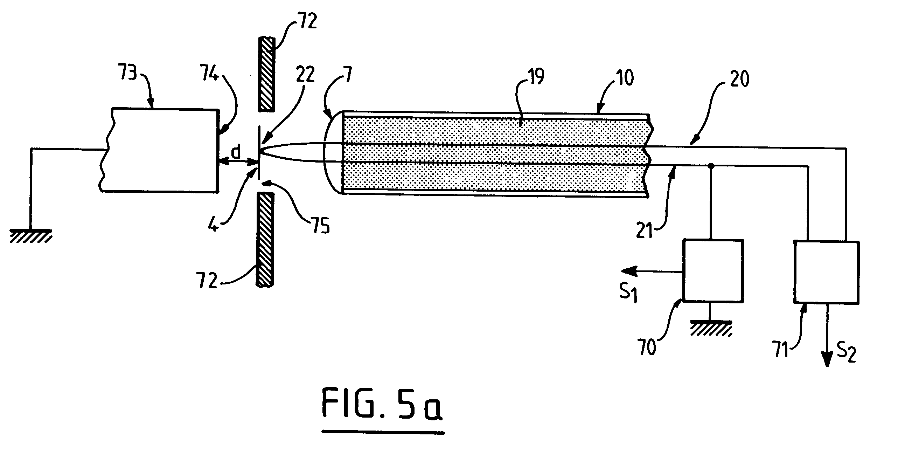

Tel que représenté sur la figure 5a, le capteur selon l'invention comprend une surface conductrice 4, en contact thermique avec la soudure 22 d'un thermocouple 20, 21. Les conducteurs 20 et 21 du thermocouple sont blindés au moyen d'une gaine métallique cylindrique 10 dont ils sont séparés par un isolant minéral 19. Pour assurer l'étanchéité du câble blindé ainsi formé, l'extrémité de la gaine 10 est fermée par un bouchon 7, laissant passer l'extrémité des conducteurs 20, 21 du côté du point de soudure 22.

Pour l'application à la détermination des caractéristiques d'une turbomachine, la surface conductrice 4 est disposée au droit d'une rangée d'aubes 73, au moyen d'une ouverture 76 pratiquée dans la paroi 72 du carter de la turbine. La surface conductrice 4 est en outre rendue solidaire de ce carter et disposée à l'alignement de sa surface interne, de telle manière que la distance $\underline{d}$ entre la surface conductrice 4 et l'extrémité 74 d'une aube tournante 73 soit identique à celle qui sépare le carter 72 de cette extrémité d'aube.

La surface conductrice 4 définit alors avec l'extrémité d'une aube tournante, lorsque cette extrémité 74 passe à proximité de ladite surface, un condensateur dont la capacité est une fonction de la distance $\underline{d}$.

En reliant l'extrémité opposée à la soudure 22, d'un des conducteurs 20 ou 21 du thermocouple, à un circuit 70 similaire à l'un des circuits connus des brevets cités au titre de l'état de la technique GB-2 071 852 ou FR 2 506 023, ou à tout autre circuit oscillant équivalent, on peut obtenir en sortie dudit circuit 70 un signal $S_1$ qui est une fonction de la capacité du condensateur formé par l'extrémité d'aube 74 et la surface conductrice 4. Ce signal $S_1$ peut être traité, d'une façon connue des techniques de l'électronique, pour déterminer la distance $\underline{d}$ ou bien la vitesse de rotation de la roue de turbine.

En reliant les extrémités opposées à la soudure 22 des deux conducteurs 20 et 21 du thermocouple à un circuit 71 connu des techniques de mesure de températures, on peut obtenir un signal $S_2$ qui est une fonction de la température de la surface conductrice 4 et par conséquent de la température du carter au voisinage de cette surface conductrice.

Le dispositif selon l'invention permet donc de connaître à la fois, pour le même point du carter, tous les paramètres :
- jeu des extrémités d'aubes,
- vitesse du rotor,
- température du carter,
qui sont déterminants pour élaborer un système d'asservissement permettant d'améliorer nettement réellement le rendement du moteur.

A cet effet, il sera aussi particulièrement avantageux de disposer des capteurs selon l'invention à plusieurs emplacements différents de la turbomachine de manière à obtenir des informations aussi complètes que possible sur les conditions de fonctionnement du moteur. On disposera notamment ces capteurs à des endroits où le régime des gaz est différent, en sorte que les températures sont différentes ce qui entraîne une évolution différente du jeu entre extrémités d'aubes et carter.

Dans le but de rendre le capteur selon l'invention apte à résoudre le problème de son fonctionnement à des températures aussi élevées que celles des carters de turbomachines, soit environ 500 à 750°C, il est proposé ci-après trois exemples de réalisation de ce capteur.

## Exemple I

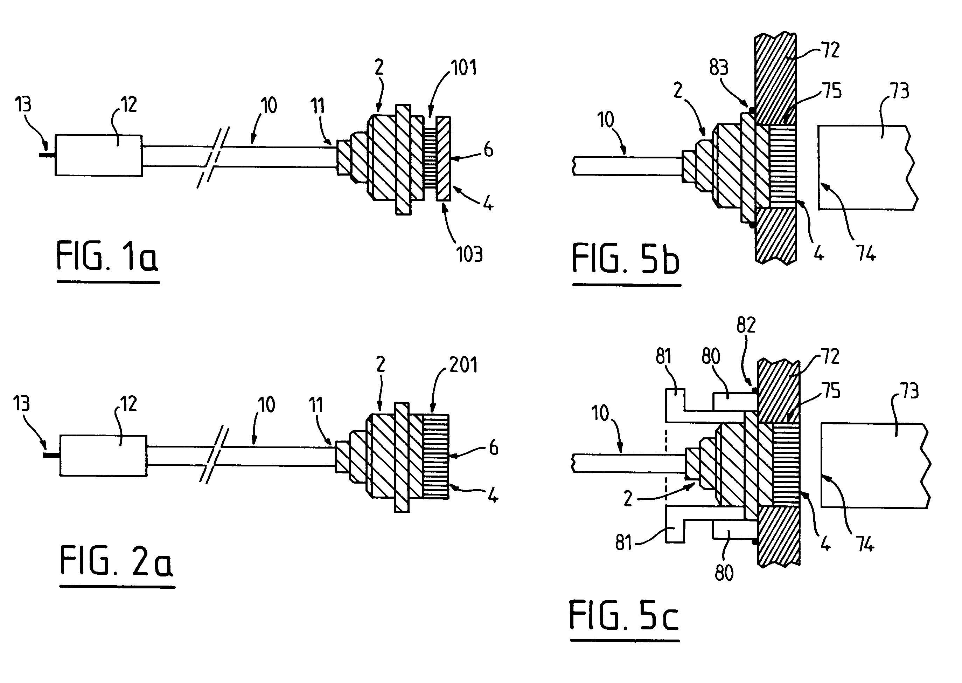

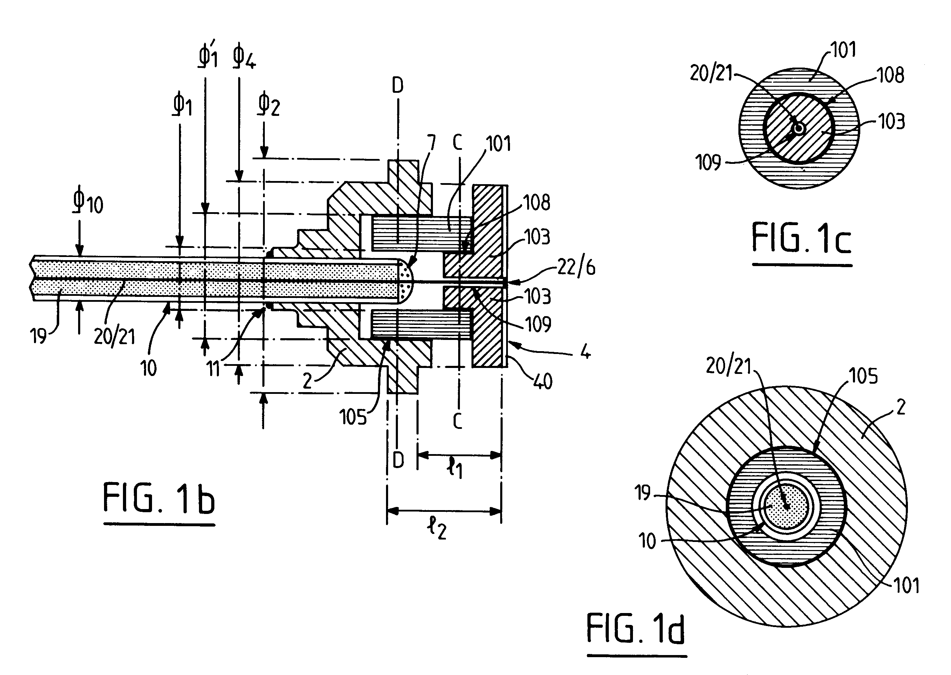

L'ensemble des figures 1 illustre cet exemple I de réalisation.

La figure 1a montre une vue longitudinale externe de ce capteur, représenté schématiquement. Tel que représenté sur cette figure 1a, ce capteur comprend un corps de capteur 2, soudé par une soudure 11 à la gaine cylindrique métallique 10, et une broche de raccordement 12, 13 des conducteurs protégés par la gaine aux circuits de mesures électriques 70 et 71. La broche de raccordement présente un boîtier 12 et des sorties 13.

Ce capteur comprend également une tête d'électrode 103 présentant une surface circulaire plane 4 conductrice et une pièce intermédiaire d'isolement électrique 101.

Toutes les pièces du capteur, en dehors de l'ensemble formé par les conducteurs du thermocouple, sont de révolution.

Tel que représenté en coupe longitudinale schématique sur la figure 1b, ce capteur comprend :

- le corps du capteur 2, muni d'un logement axial pour la gaine métallique 10 du thermocouple 20, 21, et soudé par la soudure 11 à cette gaine ;

- la pièce intermédiaire isolante 101, par exemple en céramique, ici de forme annulaire pour laisser passer la gaine 10, et fixée au corps 2 par une brasure étanche 105, le corps 2 étant muni d'un évidement interne de diamètre légèrement supérieur au diamètre externe de l'anneau 101 ;

- l'électrode 103 munie d'un épaulement de diamètre légèrement inférieur au diamètre interne de l'anneau 101 et sur lequel est fixée la pièce intermédiaire isolante 101 par une brasure étanche 108, cette électrode 103 étant munie en outre d'une ouverture axiale 109 pour laisser passer les conducteurs 20, 21 du thermocouple, et présentant une surface conductrice 4 externe plane. L'électrode 103 peut être éventuellement munie d'une métallisation 40 de même surface que cette surface conductrice 4.

- des conducteurs 20, 21 en des matériaux aptes à former un thermocouple utilisable à des températures de l'ordre de 500 à 1000°C, dont le point de soudure 22 est fixé en 6 à l'alignement de la face externe de l'électrode 103 ; ces conducteurs étant noyés dans l'isolant minéral 19 et blindés par la gaine 10 à l'exception de leur extrémité voisine de leur point de soudure, laquelle est dénudée pour permettre son passage dans l'ouverture 109 et l'application du point de soudure 22 au point 6 où la température doit être mesurée, la gaine 10 étant obturée, du côté où les conducteurs sont dénudés, par un bouchon d'étanchéité 7.

La figure 1c représente schématiquement une coupe transversale du capteur selon l'axe C-C. Selon cette coupe, on trouve la tête d'électrode 103 munie de l'ouverture 109 pour les conducteurs 20, 21 ; et la pièce intermédiaire isolante 101 fixée sur l'électrode 103 par la brasure étanche 108.

La figure 1d représente schématiquement une coupe transversale du capteur selon l'axe D-D. Selon cette coupe, on trouve les conducteurs 20, 21 noyés dans l'isolant minéral 19 et blindés par la gaine 10 ; la pièce intermédiaire annulaire 101 isolante et le corps du capteur 2 fixé sur la pièce intermédiaire isolante par une brasure étanche 105.

Le tableau I donne des dimensions des diamètres $\phi$ et des indications de matériaux appropriés à mettre en oeuvre ce capteur dans cet exemple de réalisation.

Les soudure 11 et 6 sont de préférence réalisées au laser. Les brasures d'étanchéité 108 et 105 sont de préférence réalisées au moyen d'or (Au) ou d'argent-cuivre (Ag-Cu) qui sont aptes à former des brasures céramiques-métal étanches à très hautes températures. Quand elle existe, la métallisation 40 de la surface conductrice 4 est de préférence réalisée au moyen d'une couche de molymanganèse (Mo/Mn) couverte d'une couche de nickel (Ni), l'ensemble présentant une épaisseur de l'ordre de au moins 0,05 mm.

Après le montage des différents éléments du capteur, les dimensions longitudinales sont de l'ordre de :

$\ell_1 \simeq 2{,}85$ mm

$\ell_2 \simeq 3{,}85$ mm.

Ce capteur peut être utilisé pour la mesure des caractéristiques de turbomachine à des températures de l'ordre de 500° à 650°C.

## Exemple II

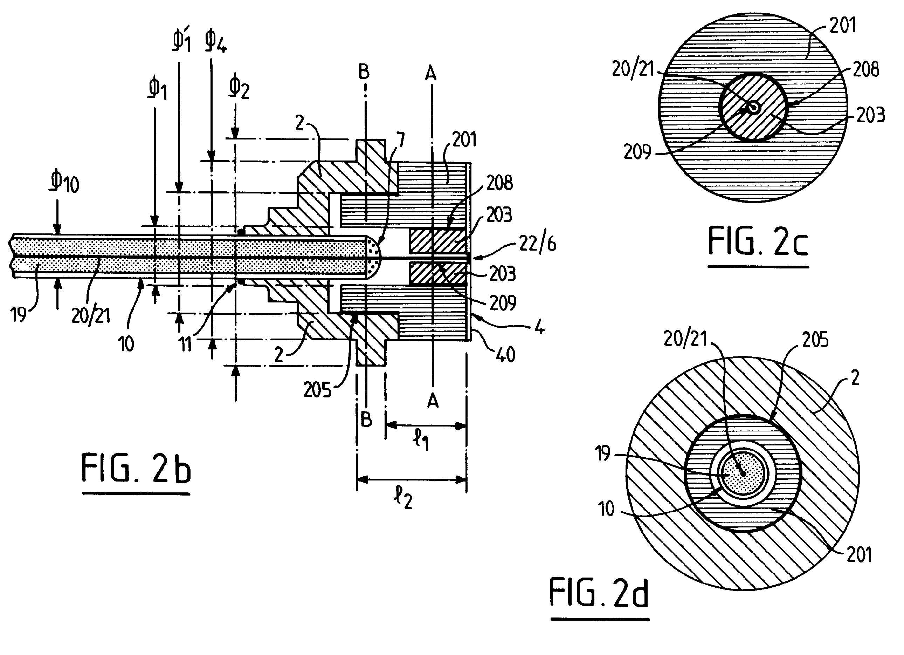

L'ensemble des figures 2 illustre cet exemple de réalisation.

La figure 2a montre une vue longitudinale externe de ce capteur, représenté schématiquement. Tel que représenté sur la figure 2a, ce capteur comprend le corps du capteur 2 monté sur la gaine 10 de manière identique à celle décrite dans l'exemple I et une broche de raccordement 12, 13 également identique.

Dans ce second exemple, comme dans le premier, toutes les pièces du capteur, en dehors du thermocouple, sont de révolution.

Tel que représenté en coupe longitudinale schématique sur la figure 2b ce capteur comprend :

- le corps du capteur 2 monté sur la gaine 10, comme il a été dit précédemment ;

- l'électrode 203, ici de forme annulaire, dont l'ouverture axiale 209 est prévue pour le passage des conducteurs 20, 21 du thermocouple ;

- la pièce intermédiaire isolante 201, qui présente ici un volume plus important que dans l'exemple 1, qui est fixée au corps 2 par la brasure étanche 205 et à l'électrode 203 par la brasure étanche 208 ;

- les conducteurs 20, 21 aptes à former un thermocouple dont le point de soudure 22 est fixé en 6 sur la face externe de l'électrode 203 ;

- la métallisation 40 qui couvre la face externe de l'électrode 203 et la face avant de la pièce isolante 101, pour former la surface conductrice 4. Cette métallisation 40 est, dans ce cas, nécessaire.

Les autres éléments du capteur sont identiques à ceux de l'exemple I.

Le capteur décrit dans ce second exemple de réalisation est prévu pour fonctionner à des températures comprises entre 650° et 800°C. Cet effet est obtenu par rapport à l'exemple 1, en prévoyant des éléments électrode et pièce intermédiaire isolante de formes différentes. En effet, ici, c'est l'électrode qui est annulaire et la pièce isolante qui présente un épaulement sur lequel s'appuie le corps du boîtier 2. Dans ces conditions, les surfaces de brasure entre la pièce intermédiaire et respectivement le corps du capteur et l'électrode, sont plus grandes et lesdites brasures sont plus étanches et supportent mieux les températures de fonctionnement élevées.

Il suffit alors de former la surface conductrice 4 par métallisation des faces avant alignées des éléments 201 et 203.

La figure 2c représente schématiquement une coupe transversale du capteur selon l'axe A-A. Selon cette coupe, on trouve l'électrode 203 munie de l'ouverture 209 pour les conducteurs 20, 21 ; la pièce intermédiaire isolante 201 fixée sur l'électrode par la brasure étanche 208.

La figure 2d représente schématiquement une coupe transversale du capteur selon l'axe B-B. Selon cette coupe, on trouve les conducteurs 20, 21 noyés dans l'isolant minéral 19 et blindés par la gaine 10 ; la pièce intermédiaire isolante 201 et le corps du capteur 2 fixé sur cette dernière par la brasure étanche 205.

Le tableau II donne des dimensions des diamètres $\phi$ et matériaux des différentes pièces pour une mise en oeuvre de ce capteur.

Les soudures, brasures, et métallisations sont réalisées avec les mêmes moyens que dans l'exemple I, et les dimensions $\ell_1$ et $\ell_2$ identiques.

## Exemple III

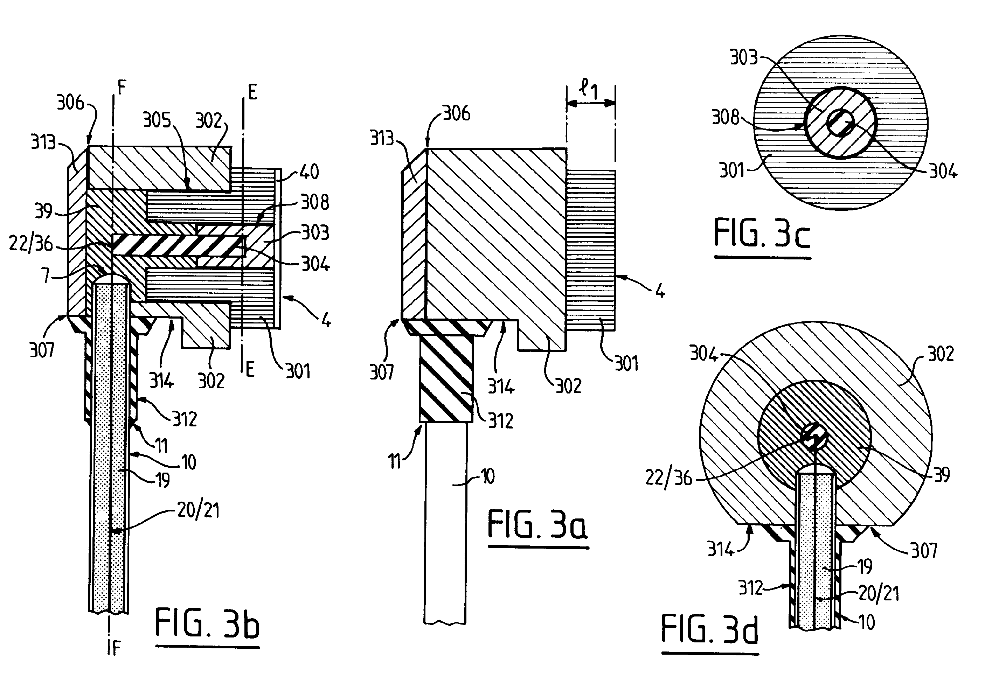

L'ensemble des figures 3 illustre cet exemple de réalisation.

La figure 3a montre une vue longitudinale externe de ce capteur représenté schématiquement. Tel que représenté sur cette figure 3a, ce capteur comprend un corps de capteur 302, en forme d'anneau dont la surface latérale externe est munie d'un pan coupé 314. La surface du pan coupé 314 est munie d'une ouverture circulaire de diamètre très légèrement supérieur au diamètre externe de la gaine 10 du thermocouple. Un manchon 312 de diamètre interne légèrement supérieur à celui de la gaine 10 est fixé par la soudure étanche 11 sur cette gaine et par la soudure étanche 307 sur le pan coupé 314. Un chapeau 313 appliqué sur la face arrière de l'anneau 302 vient fermer de façon étanche ce corps de capteur 302 au moyen de la soudure 306. La figure 3a montre encore la pièce dite intermédiaire isolante 301 et la surface conductrice 4.

Tel que représenté en coupe longitudinale schématique le capteur de cet exemple III comprend :
- le corps du capteur 302 métallique, muni du pan coupé 314, et du logement pour la gaine métallique 10 du thermocouple 20/21 ;
- le manchon métallique 312 fixé par la soudure 11 à cette gaine 10 et par la soudure 307 au pan coupé 314 ;
- le chapeau 313 fixé au corps du capteur par la soudure 306 ;
- la pièce intermédiaire isolante 301 de révolution, par exemple en céramique présentant un épaulement de diamètre légèrement inférieur au diamètre interne de l'anneau formant le corps du capteur 302, cette pièce intermédiaire isolante étant fixée au corps du capteur par une brasure étanche 305 ; cette pièce intermédiaire isolante présentant encore un évidement axial pour recevoir l'électrode 303 ;
- l'électrode 303 de révolution de diamètre externe légèrement inférieur au diamètre interne du logement axial de la pièce isolante intermédiaire 301, l'électrode 303 et la pièce intermédiaire isolante 301 étant fixée l'une à l'autre par une brasure étanche 308 de manière telle que leurs faces avant sont alignées ; l'électrode 303 présentant en outre un évidement axial pour recevoir un barreau métallique 304 ;
- le barreau métallique 304 choisi de préférence du même métal que celui qui forme la gaine du thermocouple, qui s'étend du point de soudure 22 du thermocouple jusqu'à l'électrode 303, et qui permet ainsi d'assurer le contact thermique entre le point de soudure 22 du thermocouple, soudé en 36 sur le barreau 304, et la surface conductrice 4 ;
- la surface conductrice 4 formée par une métallisation 40 réalisée en surface des faces avant alignées des pièces 301 et 303 ;
- le thermocouple 20, 21, sa gaine 10 et son isolant minéral 19 sont identiques aux cas des exemples I et II.

Tel que représenté sur la figure 3c en coupe selon l'axe E-E de la figure 3b, ce capteur montre la pièce isolante 301, de révolution présentant un logement axial pour l'électrode 303 sur laquelle elle est fixée par la brasure 308 ; et le barreau métallique 304 dans un logement axial de l'électrode 303.

Tel que représenté sur la figure 3d, en coupe selon l'axe F-F de la figure 3b, ce capteur comprend le corps du capteur 302 muni du pan coupé 314, une ouverture radiale perpendiculaire au pan coupé 314 pour introduire la gaine 10 du thermocouple 20, 21 de telle manière que le point de soudure 22 vienne sensiblement au centre de symétrie du dispositif en coïncidence avec l'extrémité du barreau 304 sur laquelle ce point de soudure est soudé en 36.

L'intervalle entre les différentes pièces 304, 303, 301, 302, le chapeau 313 et le thermocouple peut être favorablement empli avec un isolant minéral en poudre 39, par exemple le même que l'isolant minéral 19, ou un des matériaux possibles pour constituer l'isolant minéral 19.

La dimension $\ell_1$ est favorablement de 2mm. Le diamètre externe $\phi_4$ de la pièce isolante 301 est favorablement de 6mm et le diamètre externe $\phi_2$ du corps du capteur de 7,8mm.

Ce capteur peut être utilisé pour la mesure des caractéristiques d'un moteur d'hélicoptère ou d'un petit avion, à des températures de l'ordre de 700°C.

Le tableau III donne un exemple de dimensions et matériaux pour mettre en oeuvre le capteur décrit dans cet exemple III.

On notera que les dimensions qui ne sont pas données ne sont pas critiques.

Dans chacun de ces exemples de réalisation on pourra utiliser, pour réaliser le thermocouple blindé à isolant minéral, un câble de transmission de la marque THERMOCOAX de référence 2ABI15 ou 2 PRe Re 15 par exemple, de longueur $\ell \simeq 10^3$ mm.

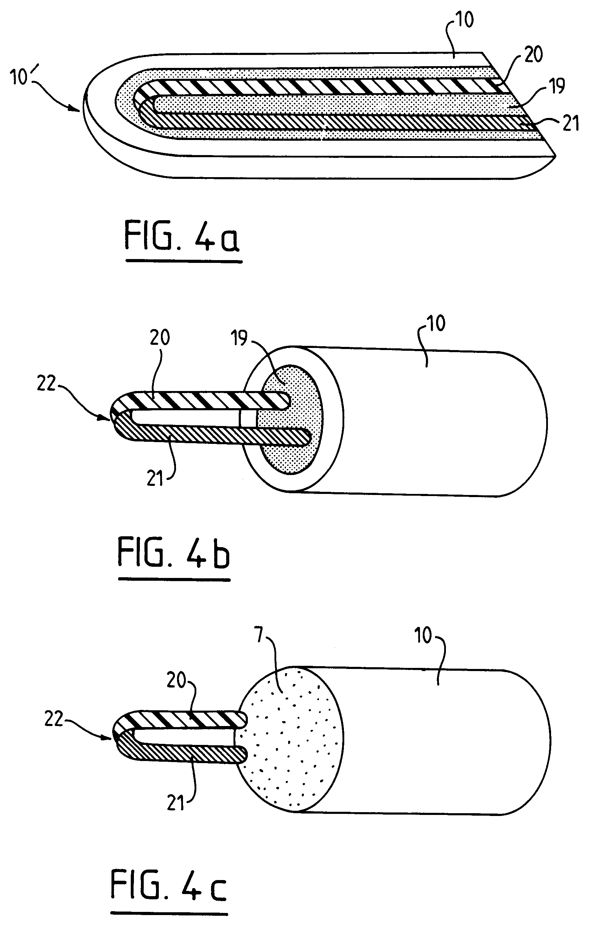

Ce câble est partiellement représenté en coupe longitudinale et en perspective sur la figure 4a. Il présente favorablement une gaine 10 en Inconel (2ABI15) ou en platine rhodié (2 PRe Re 15) cylindrique, qui contient deux conducteurs 20 et 21 favorablement en Chromel-Alumel (2ABI15), en nicrosil et nisil, ou en platine-platine rhodié respectivement, isolés entre eux et isolés de la gaine par une poudre d'isolant minéral 19 compactée qui sera choisie de préférence parmi MgO, $HfO_2$, BN.

Le câble est terminé par une partie arrondie 10′ qui correspond au point de soudure 22 des deux conducteurs.

Pour l'utilisation aux fins de l'invention, la gaine 10 est découpée à proximité du point de soudure 22 pour dénuder les conducteurs 20, 21 et le point de soudure, sur une longueur d'environ 3,5 mm, comme il est montré en perspective sur la figure 4b.

Puis la gaine est obturée de façon étanche, au niveau de la découpe, par un bouchon 7. Pour les fins de l'invention, ce bouchon sera avantageusement réalisé au moyen du matériau de scellement décrit dans le brevet FR 1590777 et qui est composé de

$$SiO_2 \simeq 10 \text{ \% en moles} \qquad CaO \simeq 20 \text{ \% en moles}$$
$$B_2O_3 \simeq 35 \text{ \% en moles} \qquad ZnO \simeq 35 \text{ \% en moles}$$

le scellement étant effectué à une température de l'ordre de 1000°C. Le câble présente alors l'aspect montré en perspective sur la figure 4c.

Selon l'invention, le corps du capteur, la pièce intermédiaire isolante et l'électrode, dans chacun des exemples décrits, sont mis en position et brasés relativement les uns aux autres. Puis dans les exemples I et II, les conducteurs 20, 21 dénudés sont introduits dans l'ouverture 109, 209 de l'électrode 103, 203 et le point de soudure 22 est soudé au laser au point 6 de la surface avant de l'électrode, tandis que la gaine 10 est assujettie au corps du capteur 2 par la soudure laser 11. Dans l'exemple III, le point de soudure 22 est soudé à l'extrémité du barreau 304 après la mise en place de ce dernier dans le logement prévu à cet effet dans l'électrode 303, et après que la gaine du thermocouple ait été introduite dans le logement axial du corps 302. Puis le vide du corps 302 est empli de poudre d'isolant minéral, par exemple MgO, et le chapeau 313 et le manchon 312 sont fixés par les soudures lasers respectivement 306, 307 et 11. Dans les exemples I et II, la gaine 10 est également assujettie au corps 2 par la soudure laser 11.

Enfin la face avant des différents capteurs est munie si nécessaire de la métallisation 40.

Pour la mise en place du capteur sur le carter 72 de la turbine, il est prévu dans la paroi de ce dernier des petites ouvertures circulaires 75 de diamètre légèrement supérieur à $\phi_4$.

Tel que représenté en coupe partielle sur la figure 5b, le capteur peut être introduit dans l'ouverture 75 et fixé au carter 72 par une soudure 83 de telle manière que la surface conductrice 4 soit à l'alignement de la surface interne du capteur.

Tel que représenté en coupe partielle sur la figure 5c, le capteur peut être introduit dans l'ouverture 75 tout autour de laquelle est soudé en 82 un boulon 80. Le capteur est alors maintenu en place par la vis de blocage 81 dans l'ouverture axiale de laquelle le capteur a été préalablement introduit.

Des différents exemples de réalisation décrits, il ressort que les moyens permettant de mettre en oeuvre la réalisation d'un capteur selon l'invention sont d'une façon générale :

1° un thermocouple 20, 21, de préférence muni d'une gaine 10 dont il est isolé par un isolant minéral 19, et dénudé pour laisser libre le point de soudure 22 des conducteurs 20, 21 ;

2° une surface conductrice 4 pour réaliser une des armatures du condensateur dont l'autre armature est l'extrémité d'une aube tournante de la turbomachine, surface conductrice qui est par ailleurs en contact électrique et thermique avec le point de soudure 22 du thermocouple 20, 21 ;

3° des moyens pour réaliser le contact électrique et thermique entre le point de soudure 22 du thermocouple 20,21 et la surface conductrice 4, moyens qui comprennent au moins l'électrode 103, 203, 303, et selon le cas, ou bien une ouverture 109, 209 dans l'électrode 103, 203 avec soudure 6 du point de soudure 22 sur la face avant de l'électrode, ou bien un barreau 304 dont une extrémité est en contact thermique avec l'électrode 303 avec soudure 36 du point de soudure 22 à l'autre extrémité du barreau 304.

4° un corps de capteur métallique (2,302) qui présente une ouverture pour le passage de la gaine 10 du thermocouple 20, 21, fixé de façon étanche à cette gaine ;

5° une pièce intermédiaire isolante (10,20,30) fixée de façon étanche d'une part au corps du capteur (2,302) et d'autre part à l'électrode 103,203,303 ;

6° des circuits de mesure de la capacité du condensateur et de la température de la surface conductrice, raccordés aux extrémités libres des conducteurs 20, 21 du thermocouple.

Le dispositif selon l'invention dans une réalisation préférentielle comprendra alors un circuit d'asservissement de la vitesse du rotor pour obtenir un jeu optimal entre carter et aubes en fonction de la température. Les circuits électroniques associés au capteur selon l'invention ne sont pas décrits ici comme faisant partie de domaines connus de l'électronique.

| TABLEAU I | | |
|---|---|---|
| Eléments du capteur | Matériaux | Diamètres en mm |
| Gaine 10 | Inconel | $\Phi_{10} \approx 1,5$ |
| Corps 2 | Ferronickel | $\Phi_2 \approx 7,8$ |
| Electrode 103 | Ferronickel ou platine | $\Phi_4 \approx 6$ |
| Pièce isolante 101 | $Al_2O_3$ | $\Phi_1 \approx 1,6$ ; |
| | | $\Phi'_1 \approx 3,5$ |

| TABLEAU II | | |
|---|---|---|
| Eléments du capteur | Matériaux | Diamètres en mm |
| Gaine 10 | Inconel | $\Phi_{10} = 1,5$ |
| Corps 2 | Ferronickel | $\Phi_2 = 7,8$ |
| Electrode 203 | Ferronickel ou platine | $\Phi_1 = 1,5$ |
| Pièce isolante 201 | $Al_2O_3$ | $\Phi'_1 = 3,5$ |
| | | $\Phi_4 = 6$ |

| TABLEAU III | | |
|---|---|---|
| Eléments du capteur | Matériaux | Diamètres en mm |
| Gaine 10 | Inconel | $\Phi_{10} = 1,5$ |
| Corps 302 | Ferronickel | $\Phi_2 = 7,8$ |
| Electrode 303 | Ferronickel ou platine | |
| Barreau 304 | Inconel ou rhodié | |
| Pièce isolante 301 | $Al_2O_3$ | |
| Isolant de remplissage 39 ) | MgO, $HfO_2$, BN | $\Phi_4 = 6$ |

## Revendications

1. Capteur capacitif pour la mesure en dynamique d'au moins deux caractéristiques d'une turbomachine, ce capteur comprenant une surface conductrice (4) destinée à être fixée au carter au droit d'une rangée d'aubes tournantes (73) pour former la première armature d'un condensateur dont la seconde armature est constituée successivement par chacune des extrémités (74) des aubes tournantes lorsque ces extrémités passent à proximité de cette surface conductrice, ce capteur comprenant en outre un thermocouple en contact thermique avec la surface conductrice (4) et comprenant un moyen d'interconnexion électrique pour relier cette surface conductrice à desdits premiers moyens de détection électrique pour mesurer les variations de la capacité du condensateur (4, 74) ainsi formé, et un moyen d'interconnexion électrique pour relier ce thermocouple à desdits seconds moyens de détection électrique pour mesurer la température du carter dans la région de fixation de ladite surface conductrice, caractérisé en ce que les moyens

9

d'interconnexion électrique sont formés des propres conducteurs (20, 21) du thermocouple, ce thermocouple étant du type blindé à isolant minéral (19), dont le blindage est réalisé par une gaine métallique cylindrique (10) interrompue à proximité du point de soudure (22) pour laisser les conducteurs et le point de soudure dénudés sur une petite longueur, et en ce que les moyens d'interconnexion électrique comportent en outre des moyens pour mettre le point de soudure du thermocouple en contact électrique et thermique avec la surface conductrice (4), lesdits moyens comprenant au moins une électrode métallique (103, 203, 303), qui est munie d'une face avant plane coopérant avec la surface conductrice (4), avec laquelle le point de soudure (22) dénudé du thermocouple est en contact électrique et thermique.

2. Capteur selon la revendication 1, caractérisé en ce qu'une pièce intermédiaire isolante (101, 201, 301) en céramique est brasée de façon étanche sur l'électrode, et un corps de capteur (2) métallique est brasé de façon étanche à la fois sur la gaine (10) du thermocouple et sur la pièce isolante intermédiaire (101, 201, 301), le corps du capteur et la pièce intermédiaire étant munis de logements pour laisser passer la gaine du thermocouple.

3. Capteur selon la revendication 2, caractérisé en ce que l'électrode (103) est munie d'une ouverture axiale pour passer l'extrémité des conducteurs du thermocouple et en ce que le point de soudure (22) du thermocouple est fixé à l'alignement de la face avant plane de l'électrode et sur cette face avant plane, et en ce que le logement du corps (2) du capteur pour la gaine est axial, et cette dernière fixée au corps par une soudure étanche.

4. Capteur selon la revendication 3, caractérisé en ce que la pièce intermédiaire isolante (101) présente une forme annulaire, de diamètre interne légèrement supérieur au diamètre externe de la gaine du thermocouple, en ce qu'elle est fixée d'une part sur un épaulement de l'électrode (103), cet épaulement présentant un diamètre externe légèrement inférieur au diamètre interne de la pièce isolante annulaire, et en ce qu'elle est fixée d'autre part dans un logement interne du corps de capteur qui présente un diamètre légèrement supérieur au diamètre externe de la pièce isolante annulaire, la face avant plane de l'électrode formant la surface conductrice, éventuellement couverte d'une métallisation.

5. Capteur selon la revendication 3, caractérisé en ce que la pièce intermédiaire isolante (201) est de révolution, présentant un logement axial de diamètre légèrement supérieur au diamètre externe de la gaine, présentant une partie de diamètre externe égal à celui de la surface conductrice (4) et présentant une partie formant un épaulement de diamètre externe intermédiaire, en ce que l'électrode (203) est de forme annulaire de diamètre externe légèrement inférieur au diamètre interne de la pièce isolante, en ce que le corps du capteur (2) est de révolution et présente un logement axial de diamètre interne légèrement supérieur à celui de l'épaulement de la pièce isolante (201), et en ce que le corps du capteur est fixé par son logement sur l'épaulement de la pièce intermédiaire, cette dernière étant fixée par son logement axial sur la surface externe de l'électrode de manière telle que les faces avant de l'électrode et de la pièce isolante sont à l'alignement et sont munies d'une métallisation pour former la surface conductrice.

6. Capteur selon la revendication 2, caractérisé en ce que l'électrode (303) est munie d'un logement axial, disposé du côté opposé à la surface plane portant la surface conductrice (4), logement approprié à recevoir une extrémité d'un barreau (304) métallique et en ce que le point de soudure (22) du thermocouple est fixé à l'autre extrémité du barreau métallique.

7. Capteur selon la revendication 6, caractérisé en ce que l'électrode (303), son logement axial et le barreau métallique (304) sont de révolution, le diamètre externe du barreau étant légèrement inférieur au diamètre interne du logement de l'électrode, en ce que la pièce intermédiaire isolante (301) est de révolution présentant un logement axial de diamètre légèrement supérieur au diamètre externe de l'électrode, une partie de diamètre externe égal à celui de la surface conductrice et présentant une partie formant un épaulement de diamètre externe intermédiaire, en ce que le corps du capteur (302) est annulaire et présente un logement axial de diamètre interne légèrement supérieur au diamètre intermédiaire de la pièce intermédiaire isolante, en ce que le corps du capteur comprend en outre une ouverture circulaire radiale, pratiquée perpendiculairement à un méplat latéral (314), de diamètre légèrement supérieur à celui de la gaine (10), en ce que le corps du capteur est fixé par son logement sur l'épaulement de la pièce intermédiaire, cette dernière étant fixée par son logement axial sur la surface externe de l'électrode de manière telle que la surface avant de l'électrode et de la pièce isolante sont à l'alignement et sont munies d'une métallisation pour former la surface conductrice, en ce que la gaine du thermocouple étant introduite dans l'ouverture radiale du corps, le point de soudure (22) du thermocouple étant fixé sur une des extrémités (16) du barreau (304) et l'autre extrémité du barreau étant en place dans le logement axial de l'électrode (303), un chapeau de fermeture (313) est fixé de manière étanche sur la face du corps opposée à la surface conductrice et la gaine du thermocouple est maintenue par un manchon fixé à la fois à la gaine et au corps de manière étanche, et en ce que la partie creuse du corps du capteur est emplie d'isolant (39) minéral en poudre.

8. Capteur selon l'une des revendications 2 à 7, caractérisé en ce que le corps du capteur (2) est en ferro-nickel, la pièce isolante (101, 201, 301) est en alumine et l'électrode (103, 203, 303) en un matériau choisi entre le ferro-nickel et le platine, la métallisation (4) lorsqu'elle existe ou la surface conductrice lorsqu'elle est constituée par une métallisation est une couche de molymanganèse surmontée d'une couche de nickel, le barreau lorsqu'il existe est en Inconel ou en Platine-Rhodié, en ce que les brasures étanches sont choisies parmi l'or et l'argent-cuivre, et en ce que les fixations étanches du corps du capteur sur la gaine et du point de soudure du thermocouple sur l'électrode ou le barreau sont du type soudure au laser, ainsi que les soudures du chapeau et du manchon sur le corps lorsque ces pièces existent.

9. Capteur selon la revendication 8, caractérisé en ce que la gaine du thermocouple (40) est en Inconel ou en Platine-Rhodié, l'isolant minéral (19) du thermocouple ou du capteur (39) est choisi parmi MgO, $HfO_2$ ou NB, et les conducteurs du thermocouple sont respectivement choisis parmi le Nicrosil-Nisil, le platine-platine rhodié, le Chromel-Alumel.

10. Procédé de mesure des caractéristiques d'une turbomachine, mettant en oeuvre un capteur selon l'une des revendications 1 à 9, comprenant les étapes de :
   - fixation du capteur dans un logement pratiqué dans la paroi du carter de la turbine au droit d'une rangée d'aubes tournantes, au moyen d'un manchon, par le moyen de vis et d'écrou, ou par le moyen de soudures ;
   - raccordement d'au moins un conducteur du thermocouple à un circuit électrique fournissant un signal fonction de la capacité qui existe entre la surface conductrice et chacune des extrémités d'aubes lorsque ces dernières passent à proximité de cette surface ;
   - raccordement des deux conducteurs du thermocouple à un circuit électrique fournissant un signal fonction de la température de la surface conductrice du capteur ;
   - traitement électronique de ces signaux pour fournir un signal de commande d'un dispositif d'asservissement permettant de faire varier la température du carter.

## Patentansprüche

1. Kapazitive Meßsonde zum dynamischen Messen von wenigstens zwei Eigenschaften einer Strömungsmaschine, wobei diese Meßsonde eine Leitfläche (4) zum Befestigen auf dem Gehäuse gegenüber einer Reihe rotierender Schaufeln (73) zur Bildung des ersten Belags eines Kondensators enthält, wobei der zweite belag aufeinanderfolgend durch die jeweiligen äußeren Enden (74) der rotierenden Schaufeln gebildet wird, wenn diese äußeren Enden in der Nähe dieser Leitfläche passieren, und die Meßsonde außerdem ein Thermoelement in Wärmekontakt mit der Leitfläche (4) und ein elektrisches Verbindungsmittel zum Anschließen dieser Leitfläche mit den ersten elektrischen Detektormitteln zum Messen der Änderungen in der Kapazität des auf diese Weise gebildeten Kondensators (4, 74) und ein elektrisches Verbindungsmittel zum Anschließen dieses Thermoelements an die zweiten elektrischen Detektormittel zum Messen der Temperatur des Gehäuses im Befestigungsbereich der Leitfläche enthält, dadurch gekennzeichnet, daß die elektrischen Verbindungsmittel aus den eigenen Leitern (20, 21) des Thermoelements bestehen, das mit einem Mineralisolierstoff (19) isoliert und mit einer Verkleidung aus einer zylindrischen Metallhülle (10) verkleidet ist, die in der Nähe der Weichlötstelle (22) zum Freilassen der Leiter und der Weichlötstelle über eine kurze Strecke unterbrochen ist, und daß die elektrischen Verbindungsmittel außerdem Mittel zum elektrischen und thermischen Kontaktieren der Weichlötung des Thermoelements mit der Leitfläche (4) enthalten, wobei diese Mittel wenigstens eine metallische Elektrode (103, 203, 303) mit einer flachen Vorderseite enthalten, die mit der Leitfläche (4) zuisammenarbeitet, mit der die freigelegte Weichlötstelle (22) des Thermoelements in elektrischem und thermischem Kontakt steht.

2. Meßsonde nach Anspruch 1, dadurch gekennzeichnet, daß ein isolierendes Zwischenstück (101, 202, 301) aus Keramik durch Hartlöten undurchlässig auf der Elektrode befestigt ist, und ein metallischer Meßsondenkörper (2) durch Hartlöten undurchlässig gleichzeitig auf der Hülle (10) des Thermoelements und auf dem isolierenden Zwischenstück (101, 201, 301) befestigt ist, wobei der Meßsondenkörper und das isolierende Zwischenstück mit Lagerungen zum Durchlassen der Thermoelementhülle versehen sind.

3. Meßsonde nach Anspruch 2, dadurch gekennzeichnet, daß die Elektrode (103) mit einer Axialöffnung zum Durchlassen der Enden der Leiter des Thermoelements versehen ist, daß die Weichlötstelle (22) des Thermoelements fluchtend mit der flachen Vorderseite der Elektrode und auf dieser flachen Vorderseite befestigt ist, daß die Körperlagerung (2) der Meßsonde für die Hülle axial ist, und letztere mittels einer undurchlässigen Weichlötung auf dem Körper befestigt ist.

4. Meßsonde nach Anspruch 3, dadurch gekennzeichnet, daß das isolierende Zwischenstück (101) eine Ringform mit einem Innendurchmesser etwas größer als der Außendurchmesser der Thermoelementhülle hat, dieses Stück einerseits auf einem Ansatz der Elektrode (103) befestigt ist, wobei dieser Ansatz einen etwas kleineren äußeren Durchmesser als der Innendurchmesser des ringförmigen isolierenden Stücks besitzt, und das Stück andererseits in einer Innerlagerung des Meßsondenkörpers befestigt ist, der einen Durchmesser etwas größer als der Außendurchmesser des ringförmigen isolierenden Stücks besitzt, wobei die flache Vorderseite der Elektrode die Leitfläche bildet, die gegebenenfalls durch eine Metallisierung bedeckt wird.

5. Meßsonde nach Anspruch 3, dadurch gekennzeichnet, daß das isolierende Zwischenstück (201) ein Rotationselement ist, das eine Axiallagerung mit einem Durchmesser etwas größer als der Außendurchmesser der Hülle und einen Teil mit einem Außendurchmesser gleich dem der Leitfläche (4) sowie einen Teil enthält, der einen Ansatz mit einem zwischenliegenden Außendurchmesser bildet, daß die Elektrode (203) eine Ringform mit einem Außendurchmesser etwas kleiner als der Innendurchmesser des isolierenden Stücks besitzt, der Meßsondenkörper (2) ein Rotationselement ist und eine Axiallagerung mit einem Innendurchmesser etwas größer als der des Ansatzes des isolierenden Stücks (201) besitzt, und der Meßsondenkörper durch seine Lagerung auf dem Ansatz des Zwischenstücks festgesetzt ist, wobei letztgenanntes Stück durch seine Axiallagerung auf der externen Fläche der Elektrode derart befestigt ist, daß die Vorderflächen der Elektrode und des Isolierstücks fluchten und mit einer Metallisierung zur Bildung der Leitfläche versehen sind.

6. Meßsonde nach Anspruch 2, dadurch gekennzeichnet, daß die Elektrode (303) mit einer Axiallagerung versehen ist, die sich an der Seite gegenüber der flachen Seite mit der Leitfläche (4) befindet, und diese Lagerung sich zum Aufnehmen eines äußeren Endes eines Metallstabes (304) eignet, und daß die Weichlötstelle (22) des Thermoelements an dem anderen äußeren Ende des Metallstabes befestigt ist.

7. Meßsonde nach Anspruch 6, dadurch gekennzeichnet, daß die Elektrode (303), ihre Axiallagerung und der Metallstab (304) Rotationselemente sind, wobei der Außendurchmesser des Stabes etwas kleiner ist als der Innendurchmesser der Lagerung der Elektrode, daß das isolierende Zwischenstück (301) ein Rotationselement mit einer Axiallagerung ist, deren Durchmesser etwas größer als der Außendurchmesser der Elektrode ist, wobei ein Teil des Außendurchmessers gleich dem der Leitfläche ist und einen Teil aufweist, der einen Ansatz mit einem zwischenliegenden Außendurchmesser bildet, daß der Meßsondenkörper (302) ringförmig ist und eine Axiallagerung aufweist, deren Innendurchmesser etwas größer als der Zwischendurchmesser des isolierenden Zwischenstücks ist, und daß der Meßsondenkörper außerdem eine kreisförmige Radialöffnung enthält, die nahezu senkrecht zu einer ebenen Seitenfläche (314) mit einem Durchmesser etwas größer als der der Hülle (10) verläuft, daß der Meßsondenkörper durch seine Lagerung auf dem Ansatz des Zwischenstücks befestigt ist, und dieses Zwischenstück durch seine Axiallagerung auf der Außenfläche der Elektrode derart befestigt ist, daß die Vorderfläche der Elektrode und des Isolierstücks fluchten und mit einer Metallisierung zur Bildung der Leitfläche versehen sind, daß die Hülle des Thermoelements in die Radialöffnung des Körpers eingeführt wird, wobei die Weichlötstelle (22) des Thermoelements auf einem der äußeren Enden (36) des Stabes (304) angebracht wird, das andere äußere Ende des Stabes in der Axiallagerung der Elektrode (303) am Platz ist, ein Abschlußdeckel (330) undurchlässig auf der Körperfläche gegenüber der Leitfläche befestigt ist und die Thermoelementhülle durch eine feste Muffe gleichzeitig auf der Hülle und auf dem Körper undurchlässig festgehalten wird, und daß der Hohlteil des Meßsondenkörpers mit pulverförmigem Mineralisolierstoff (39) gefüllt wird.

8. Meßsonde nach einem oder mehreren der Ansprüche 2 bis 7, dadurch gekennzeichnet, daß der Meßsondenkörper (2) als Ferronickel, das Isolierstück (101, 201, 301) aus Aluminium und die Elektrode (103, 203, 303) aus einem zwischen dem Ferronickel und Platin gewählten Werkstoff bestehen, die möglicherweise vorhandene Metallisierung (4) oder die Leitfläche, wenn sie aus einer Metallisierung besteht, eine Molymanganschicht mit einer Nickelschichtbedeckung ist, der möglicherweise vorhandene Stab aus Inconel oder aus rhodiniertem Platin besteht, daß die temperanrfesten Hartlötungen aus Gold oder Silber/Kupfer gewählt werden, und daß die undurchlässigen Befestigungen des Meßsondenkörpers auf der Hülle und der Weichlötstelle des Thermoelements auf der Elektrode oder auf dem Stab durch Weichlöten mit dem Laser erfolgen, wie auch die Weichlötungen des Deckels und der Muffe auf dem Körper, wenn diese Teile vorhanden sind.

9. Meßsonde nach Anspruch 8, <u>dadurch gekennzeichnet</u>, daß die Thermoelementhülle (40) aus Inconel oder aus rhodiniertem Platin besteht, der Mineralisolierstoff (19) des Thermoelements oder der Meßsonde (39) aus MgO, HfO$_2$ oder NB gewählt wird, und die Leiter des Thermoelements aus Nicrosil-Nisil, Platinrhodiniertem Platin oder aus Chromel-Alumel gewählt werden.

10. Verfahren zum Messen der Eigenschaften einer Strömungsmaschine, unter Verwendung einer Meßsonde nach einem oder mehreren der vorangehenden Ansprüche 1 bis 9, wobei dieses Verfahren folgende Schritte umfaßt:
    - Befestigung der Meßsonde in einer Lagerung auf der Wand des Gehäuses der Turbine gegenüber einer Reihe rotierender Schaufeln mit Hilfe einer Muffe mittels Schraube und Mutter oder mittels Weichlötungen;
    - Verbindung wenigstens eines Leiters des Thermoelements mit einer elektrischen Schaltung, die ein Signal liefert, das die Kapazität darstellt, die zwischen der Leitfläche und jedem der äußeren Ende der Schaufeln besteht, wenn diese Schaufeln in der Nähe dieser Fläche vorbeigehen;
    - Verbindung von zwei Leitern des Thermoelements mit einer elektrischen Schaltung, die ein Signal liefert, das die Temperatur der Leitfläche der Meßsonde darstellt;
    - elektronische Verarbeitung dieser Signale zur Lieferung eines Steuersignals für eine Steuereinrichtung zum Ändern der Temperatur des Gehäuses.

## Claims

1. A capacitive transducer for the measurement, under dynamic conditions, of at least two characteristics of a turbo-machine, which transducer comprises a conductive surface (4) to be fixed to the casing in line with a row of rotating blades (73) so as to form the first plate of a capacitor whose second plate consists, in succession, of each one of the ends (74) of the rotating blades when these ends pass in proximity to this conductive surface, and also comprises a thermocouple in thermal contact with the conductive surface (4) and an electrical interconnection means to connect this conductive surface to first electrical detection means for measuring the variations of the capacitance of the capacitor (4, 74) thus formed, and an electrical interconnection means to connect said thermocouple to second electrical detection means for measuring the temperature of the casing at the area where said conductive surface is attached, characterized in that the electrical interconnection means are formed by the actual conductors (20, 21) of the thermocouple, the thermocouple being a type which is shielded by a mineral insulator (19), the shielding being provided by a cylindrical metallic sheath (10) which is interrupted in the vicinity of the point of welding (22) in order to leave the conductors and the point of welding exposed over a small length, the electrical interconnection means also comprising means for bringing the point of welding of the thermocouple in electrical and thermal contact with the conductive surface (4), said means comprising at least one metallic electrode (103, 203, 303) which comprises a flat front surface cooperating with the conductive surface (4) and which is electrically and thermally contacted by the exposed point of welding (22) of the thermocouple.

2. A transducer as claimed in Claim 1, characterized in that an insulating intermediate piece (101, 201, 301) made of ceramic is sealingly brazed onto the electrode, a metallic transducer body (12) being sealingly brazed both onto the sheath (10) of the thermocouple and onto the intermediate insulating piece (101, 201, 301), the transducer body and the intermediate piece being provided with recesses to allow the sheath of the thermocouple to pass.

3. A transducer as claimed in Claim 2, characterized in that the electrode (103) comprises an axial opening to pass the end of the conductors of the thermocouple, in that the point of welding (22) of the thermocouple is fixed in alignment with the plane front face of the electrode and on this plane front face, and in that the recess of the transducer body (2) for the sheath is axial, the latter being fixed to the body by a sealed weld.

4. A transducer as claimed in Claim 3, characterized in that the insulating intermediate piece ( 101 ) has an annular shape of internal diameter slightly greater than the external diameter of the sheath of the thermocouple, in that it is fixed on the one hand on a shoulder of the electrode ( 103), which shoulder has an external diameter slightly less than the internal diameter of the annular insulating piece, and in that it is fixed on the other hand in an internal recess of the transducer body which has a diameter slightly greater than the external diameter of the annular insulating piece, the flat front face of the electrode forming the conductive surface which is possibly covered with a metallization.

5. A transducer as claimed in Claim 3, characterized in that the insulating intermediate piece (201) is generated by revolution, comprises an axial recess of a diameter slightly greater than the external diameter of the sheath, comprises a part of external diameter equal to that of the conductive surface (4) and a part forming a shoulder of intermediate external diameter, in that the electrode (203) has an annular shape of external diameter slightly less than the internal diameter of the insulating piece, in that the transducer body (2) is generated by revolution and comprises an axial recess of internal diameter slightly greater than that of the shoulder of the insulating piece (201), and in that the transducer body is fixed, via its recess, on the shoulder of the intermediate piece, the latter being fixed by its axial recess on the external surface of the electrode in such a manner that the front faces of the electrode and of the insulating piece are in alignment and are provided with a metallization to form the conductive surface.

6. A transducer as claimed in Claim 2, characterized in that the electrode (303) is provided with an axial recess, disposed on the side opposite to the flat surface carrying the conductive surface (4), the recess being appropriate to receive an end of a metallic bar (304), and in that the point of welding (22) of the thermocouple is fixed to the other end of the metallic bar.

7. A transducer as claimed in Claim 6, characterized in that the electrode (303), its axial recess and the metallic bar (304) are generated by revolution, the external diameter of the bar being slightly less than the internal diameter of the recess of the electrode, in that the insulating intermediate piece (301) is generated by revolution and comprises an axial recess of a diameter slightly greater than the external diameter of the electrode, a part of external diameter which is equal to that of the conductive surface and comprises a part forming a shoulder of intermediate external diameter, in that the transducer body (302) is annular and comprises an axial recess of internal diameter slightly greater than the intermediate diameter of the insulating intermediate piece, in that the transducer body further comprises a radial circular opening, formed perpendicularly to a lateral flat piece (314) of a diameter slightly greater than that of the sheath (10), in that the transducer body is fixed, via its recess, on the shoulder of the intermediate piece, the latter being fixed, via its axial recess, on the external surface of the electrode in such a manner that the front surface of the electrode and of the insulating piece are in alignment and comprise a metallization to form the conductive surface, in that, the sheath of the thermocouple is being introduced into the radial opening of the body, the point of welding (22) of the thermocouple being fixed on one of the ends (36) of the bar (304) and the other end of the bar being in position in the axial recess of the electrode (303), a closure cap (313) is fixed in a sealed manner on the face of the body opposite to the conductive surface and the sheath of the thermocouple is retained by a sleeve fixed both to the sheath and to the body in a sealed manner, and in that the hollow part of the transducer body is filled with a powdery mineral insulator (39).

8. A transducer as claimed in any one of the Claims 2 to 7, characterized in that the transducer body (2) is made of ferro-nickel, the insulating piece (101, 201, 301) is made of alumina, and the electrode (103, 203, 303) of a material selected from ferronickel and platinum, the metallization (4), if present, or the conductive surface, when it consists of a metallization, being a layer of molymanganese surmounted by a layer of nickel, the bar, if present, being made of Inconel or of rhodanized platinum, in that the sealed brazings are selected from among gold and silver-copper, and in that the sealed fixings of the transducer body on the sheath and of the point of welding of the thermocouple on the electrode or the bar are of the laser-weld type, as are the welds of the cap and of the sleeve on the body when these parts are present.

9. A transducer as claimed in Claim 8, characterized in that the sheath of the thermocouple (40) is made of Inconel or of rhodanized platinum, the mineral insulator (19) of the thermocouple or of the transducer (39) is selected from among MgO, $HfO_2$ or NB, and the conductors of the thermocouple are respectively selected from among Nicrosil-Nisil, rhodanized platinum-platinum, and Chromel-Alumel.

10. A method for measuring the characteristics of a turbo-machine, utilizing a transducer as claimed in any one of the Claims 1 to 9, comprising the steps of:
- fixing the transducer in a recess formed in the wall of the casing of the turbine in line with a row of rotating blades, by means of a sleeve, by screw and nut means, or by means of welds;
- connecting at least one conductor of the thermocouple to an electrical circuit supplying a signal which is a function of the capacitance which exists between the conductive surface and each one of the blade ends when the latter pass in proximity to this surface;
- connecting the two conductors of the thermocouple to an electrical circuit supplying a signal which is a function of the temperature of the conductive surface of the transducer;
- electronic processing of these signals to supply a signal to control a slaving device enabling variation of the temperature of the casing.

FIG. 1a

FIG. 2a

FIG. 5b

FIG. 5c

EP 0 334 441 B1

FIG.1c

FIG. 1d

FIG. 1b

FIG. 2c

FIG. 2d

FIG. 2b

FIG. 3c

FIG. 3d

FIG. 3a

FIG. 3b

## FIG. 4a

## FIG. 4b

## FIG. 4c

FIG. 5a